# EUROPEAN PATENT SPECIFICATION

(11) **EP 4 002 031 B1**
(45) Date of publication and mention of the grant of the patent: **26.06.2024**
(21) Application number: 20208230.1
(22) Date of filing: 17.11.2020
(51) Int. Cl.: G05B 19/418, H04L 9/40, G06F 9/48, G06F 9/54

(54) **MODEL AND CONCEPT TO AUTOMATE PROCESSES ACROSS SEVERAL IT SYSTEMS**
MODELL UND KONZEPT ZUR AUTOMATISIERUNG VON PROZESSEN ÜBER MEHRERE IT-SYSTEME HINWEG
MODÈLE ET CONCEPT POUR AUTOMATISER LES PROCESSUS SUR PLUSIEURS SYSTÈMES INFORMATIQUES

(43) Date of publication of application: 25.05.2022
(73) Proprietor: Robocorp Technologies, Inc., San Francisco, CA 94111 (US)
(72) Inventor: Pirinen, Erno, San Francisco, CA 94111 (US); Koskinen, Teppo, San Francisco, CA 94111 (US); Ahokas, Sampo, San Francisco, CA 94111 (US); Karjalainen, Antti, San Francisco, CA 94111 (US); Ahvenainen, Jouko, San Francisco, CA 94111 (US)
(74) Representative: Hernandez, Yorck

(56) References cited:
- EP-A1- 1 327 503
- WO-A1-2020/223371
- CN-A- 108 196 555
- US-A1- 2018 203 994

## Description

The present invention is directed towards a method for automated robot entity based execution of processes across distributed heterogeneous computing environments. The suggested teachings provide means to dynamically assign robots and/ or tasks to well performing environments and may even adapt the configuration of an environment towards proper process execution. The invention is furthermore directed towards a respectively arranged system along with a computer program product and a computer-readable medium.

WO-A-2009/053472 shows a method for orchestrating services of a service-oriented automation system and an orchestration machine. System components provide their functionality as services and are capable of interrogating services of other system components, with the automation system's behavior being controlled by orchestrating the services of the system components using an orchestration engine.

WO 2009/101212 refers to a method and system for incorporating service-oriented automation components of a manufacturing facility into a flexible IT enterprise architecture. In order to configure flexible production facilities in the form of an orchestration procedure and to specify elements, it is envisaged that the service-oriented automation components will be coupled via a higher-level orchestration middleware and that the services offered by the service-oriented automation components will be implemented using a vectorial function and one on orchestration of service-oriented automation component based layouts are integrated into the higher level.

US 2019/0266254 A1 shows a system for processing a request associated with an electronic record, comprising an artificial intelligence orchestration platform, including an artificial intelligence orchestration communication device to receive electronic record, an artificial intelligence orchestration processor coupled to the artificial intelligence orchestration communication device, and an artificial intelligence orchestration storage device.

US 2019/0015974 A1 shows a computing apparatus comprising a third computing platform having a third memory and at least one Robotic Process Automation (RPA) bot stored in the third memory, executable by the third processor and configured to receive an input command from the event case processing management module, perform predetermined robotic tasks in response to the input commands, and return outputs to the event case processing management module in response to performing the predetermined robotic tasks.

US 2019/0303779 A1 shows a system for managing robotic process automation (RPA) software robots (bots) implemented on at least one processor.

Computer implemented agents is a growing research topic involving several fields such as software automation, artificial intelligence, underlying hardware infrastructures as well as parallelization of processing steps and their distribution over a heterogeneous computer network. Robotic process automation (RPA) is a form of process automation based on software robots. Software robots complete the technical processes in a way a person would, only faster and typically with fewer mistakes. This is a technical effect that allows more reliable results.

Some technical processes might require a person to complete several manual operations over a multitude of systems. Often these steps can be described and documented comprehensively in a list of actions to take to complete the process from the beginning to the end. Robotic process automation can be applied to automate those documented actions, for instance, in a way that they can be completed automatically by software robots. Robotic process automation (RPA) may use software robots (bots), also referred to as workers or agents, possibly along with artificial intelligence, for computer implemented process automation.

RPA started out as a business user-focused domain, but as applications of RPA become more high-impact and business-critical, we start to see more developer-oriented tools emerging. With these developer tools, RPA implementation is becoming more of a domain for software robot developers, not as much for casual business users. Software robot developers want to embrace all the best practices of developers, so sharing and reusing code becomes a normal way of working.

As open-source RPA tools mature, software robots become a commodity that every organization is eventually able to use. With this change, the role of the software robot developer will be in high demand, as RPA starts coming available for new kinds of use-cases and broader audiences. Cloud orchestration will be a driver in this development as well since only a handful of users will be willing to invest in operating their own orchestration services, when the same solution can be purchased easily from the cloud.

With widely available RPA developer tools and cloud orchestration, one will see the beginning of the next wave of RPA adoption. Small and medium-sized enterprises will look for ways to incorporate business automation tools but without their own dedicated IT employees. A market need will arise for a new service provider: robotics-as-a-service (RaaS) operator. RaaS operators will claim a segment of the research field, with some operators focusing on specific verticals and others being general automation service providers.

However, as such agents, artificial workers or robots handle sensitive data there is a problem that secrets must be respected and moreover fraudulent access must be prohibited in any case. This is of general interest and needs improved solutions for data access and rights management.

The prior art does not in any case consider such privacy issues or at least an alternative contribution is required. In case several contributions are available attacks are still made more difficult and labor intense as respective entities do not know which protocols are underlying a specific RPA platform. Hence, there is a need to provide additional contributions in the research field of secure process automation, especially in a potentially distributed, heterogeneous hardware environment. Typically interfaces are at least detectable and so a sophisticated protocol is required which allows the exchange of technical secrets over the network.

Moreover the prior art lacks possibilities to respond to different hardware and software configurations. One environment may be more appropriate for the accomplishment of a task than another one. The prior art lacks a dynamic distribution of tasks to the best performing environment.

Hence, it is an object of the present invention to provide a method and a system arrangement for robot entity based execution of processes across distributed heterogeneous computing environments that allows the execution of tasks under appropriate configurations of environments. In case one environment or the configuration thereof is not able to execute a task conditions shall be adapted towards the proper processing. Moreover, it is an object of the present invention to provide a respectively arranged computer program product and a computer-readable medium.

The object is solved by the subject-matter according to the independent claims. Advantageous features are described in the dependent claims.

Accordingly, a method for automated robot entity based execution of processes across distributed heterogeneous computing environments is suggested, comprising the steps of initiating the process considering provided execution parameters and triggering the execution of the process, wherein the process defines the execution of at least one task by the robot entity operating in a first computing environment; evaluating the execution of the at least one task by a predefined accomplishment metric; storing results of a completed process execution in an output storage and launching an exception handler for an incomplete process execution which adapts the provided execution parameters and initiates and triggers the process execution again.

According to an aspect of the present invention there are two exception handling cases with failed items invoked by the exception handler:
1. Running the process again from the beginning; and/ or
2. Running just the subtask again with the data with same or different environment (cases where the execution was failed due to e.g. system crash -
and there is a valid reason for retrying in the context of same process run) Hence, an incomplete process execution results either in a completely new iteration of the process, maybe with a reconfigured environment, or at least a sub-process is performed. The process can be evaluated on a step by step basis and only those tasks that previously failed are retried. The sub steps may be executed in a chained manner meaning that a complete sub-process is accomplished or at least a selection of sub steps is performed. The method for automated robot entity based execution of processes across distributed heterogeneous computing environments assigns process tasks to robots and provides them with a computing environment, such as a server or any IT infrastructure. The computing devices are typically connected by a communication network which might involve any kind of communication such as wireless are wired communication. The method makes use of the different configurations, also referred to as heterogeneous environments, as each environment has its advantages. In this way in case one computing device is environment fails a further environment might solve the problem. The environment also includes software components and hence parameters are changed such that software is installed or the robot takes the tasks to an environment already providing such software components.

Initiating the process considering provided execution parameters and triggering the execution of the process involves that the configuration parameters are provided to the robot and accordingly a specific environment is assigned. The parameters might also include input parameters required for computation.

As the process defines the execution of at least one task by the robot entity operating in a first computing environment an order of steps as tasks is given, wherein each robot takes over at least one object, task, subtask or work item. The process holds several tasks which can be taken over by robots which may also work jointly on a single task.

After processing of at least one task evaluating the execution of the at least one task by a predefined accomplishment metric is accomplished. Hence, the method identifies whether the task is accomplished properly. The rules might indicate what data type or level of accuracy is required. Even if some tables in a database have to be filled the method may check if the data is indeed available.

In case of a positive evaluation storing results of a completed process execution in an output storage is performed. Hence, the work results are stored and may likewise serve as input for new computations in a new process.

In the case of a negative evaluation launching an exception handler for an incomplete process execution which adapts the provided execution parameters and initiates and triggers the process execution again is performed. Hence, the exception handler might provide instructions which adapt the task so it can be performed or reconfigures the environment. It might likewise be necessary to assign a further or an alternative robot to the task or have the task computed in a different environment.

This is performed until an ending condition is reached or the required result is delivered.

The secure management of authorization data involves a very specific sequence of method steps and consequently message flow. While single steps may be known and be arranged according to known scenarios the very specific arrangement of the steps and message flow as currently suggested contributes towards a safe management of secrets such as credentials for the robots.

Typically several robot entities, also referred to as robots, are involved and consequently each robot receives its task, performs the step receiving a certificate, of linking with the orchestration server, receiving a link token data, linking with a vault server and receiving credential data from the vault server upon its request and using the sent credential data to authenticate and authorize itself at a number of legacy systems to perform tasks assigned to the robot. Hence, according to an aspect of the present invention each out of a number of robots performs at least one task assigned by the orchestration server. In preliminary steps each robot entity performs the steps for receiving respective rights from the certificate providing server and the vault server. In case a robot performs several tasks such preliminary steps may be performed once or for each of the tasks to access the required legacy system.

The automated processing of instructions in a robotic process automation environment refers to the segregation of processes into single tasks and assigning them to robot entities according to an aspect of the present invention. The robots receive their task from the orchestration server and access legacy systems if required for accomplishing the tasks. It may be the case that the robots act jointly for accomplishing their tasks in case dependencies are present. Hence, the robots do not only perform their own specific tasks but rather communicate with each other over the network. Hence, they accomplish a process and each robot performs its task or tasks and shares results of one accomplished task with other robots which may rely on such a previously computed result. In this way instructions are processed and the process divided by the orchestration server is performed by the robots. In this way each robot may accomplish at least one task and interact with further robots.

The certificate data may contain information for identification of a single robot or a group of robots. The certificate data may for instance comprise a public key which is uniquely assigned to a robot. By transmitting the certificate data the orchestrator server becomes aware of available robots and the robots themselves can present the certificate data to the vault server. Upon receiving the certificate data the orchestration server can link itself with the robot, or respectively several robots. The robots themselves can transmit this certificate data, for instance the public key, to the vault server for triggering further message flow such as the transmission of the link token.

The certificate providing server according to an aspect of the present invention may be used to initialize the process of the suggested method. It is used for establishing certificates and distribution of the certificate data to the orchestration server and to each of the robots. In this way the certificate providing server introduces robot entities into the system or at least initializes robots to be introduced into the system as they are provided with the certificate data. The certificate data may be required for entering the system meaning to receive tasks from the orchestration server and to take part in the communication with the vault server according to further method steps.

Any communication in the suggested method and arrangement can be performed using further security mechanisms such as encryption or the like. Moreover, secured channels and additional hardware components may be applied for securing the data and its communication across the overall environment.

The orchestration server stores process models or generally instructions for accomplishing a specific process. The process as a whole can be treated as a task to be accomplished by a robot or the process can be broken down into single tasks which can then be performed by a number of robots. In this way the process or issue to be performed can be assigned to several robots which jointly perform required steps. The orchestration server is aware of available robots as they are linked with the orchestration server. Hence, it is known how many robots are available and especially which capacities and resources they offer. The orchestration may assign each robot the task that is most appropriate in terms of efficient handling.

At least one robot entity may be one single entity or a group of robots which work independently from each other. This does not mean that they do not share information but rather the act together for solving the overall process or issue. Hence dependencies are considered and once a first task is finished resulting knowledge may be shared amongst the robots for accomplishing a second task. The robots are able to separately perform the suggested method steps such that each robot acquires the respective information such as credentials and access information for accomplishing the task. The method steps may likewise be performed for the whole group such that the group obtains the required certificates and credential data.

One of a possible feature in the cloud platform is that it can create temporary running environments (cloud container or virtual machine) on need. The orchestrator can also:
1. In case multiple environments for robots are available the suggested method reserves a suitable number of environments for use according to incoming data flow (e.g. for each 10 work items incoming to task, reserve one environment); and/ or
2. In case of virtual environments, the suggested method creates a sufficient number of virtual environments according to incoming data flow (e.g. for each 10 work items incoming to task one temporary environment is created). Hence, a dynamic number of temporary environments is created as a function of the number of the work items or tasks.

The linking of at least one robot entity with the orchestration server may involve steps such as setting up a communication session over a communication channel. Linking means that the robot or the robots are made known to the orchestration server and vice versa. Hence, the orchestration server is aware of the robots and knows how to communicate with them. The orchestration server may hold a database including processes or receive such processes using an interface.

The link token data from the certificate providing server enables at least one robot to use the secrets from the vault server. Then a link token may contain an address of the vault server so the worker or robot is able to link and connect with the vault server. Upon reception of the link token data the vault server knows according to an aspect of the present invention that the robot is allowed to access secrets and under which circumstances. For instance the link token data may contain specific rights so the vault server can provide respective secrets.

After these steps the robot or robots perform tasks assigned to each of them by the orchestration server after linking. These steps may be performed using any number of legacy systems. A first legacy system may be an e-mail program while a second system may be a customer database. Consequently, the robots may act together and automatically reply to any email sent by a customer. In case the sender is not in the database the mail may be forwarded to a further robot. Hence, the overall process can be named answering mails, while tasks include the handling and operating of the mail program and a further task may be the look-up in a database, for example.

According to an aspect of the present invention the task is split into at least two subtasks and the step of storing or initiating again and triggering again is performed for each subtask. This provides the advantage that each subtask is handled appropriately and either finished or tried to be executed in a different or at least differently configured environment.

According to an aspect of the present invention the execution parameters define at least one of a second computing environment, an alternative task implementation, an update of input data required for process execution, a timestamp, a repeat frequency and/ or a computer environment configuration. This provides the advantage that the process and the robot get instructions how and where to execute the process. For instance a specific environment is selected and indicated that the robot shall perform the task three times. If no successful execution is reached a different configuration or environment is provided.

According to an aspect of the present invention the predefined accomplishment metric measures execution parameters and defines the required output by a set of rules. This provides the advantage that the system and the method are able to decide whether execution was successful or not. The parameters might describe the result for instance by naming an expected data type as a range of values.

According to an aspect of the present invention the exception handler is triggered in case a predefined time out is reached. This provides the advantage that in case the task is not performed in a given time frame execution is changed or stopped and retriggered.

According to an aspect of the present invention a message flow is secured by at least one of link tokens, a public key, a private key, a certificate, credential data and/ or a timestamp. This provides the advantage that entities and/ or environments can be linked using tokens and the data flow and message flow is secured.

According to an aspect of the present invention the number of involved environments is limited by the number of subtasks the robot entities process. This provides the advantage that as many environments can be used as tasks or subtasks are available. Hence each robot or task can have their own environment or several robot entities may be created on a single environment. This allows parallelization and distribution of tasks, computing effort and robots.

According to an aspect of the present invention a history of process executions is recorded and the task is assigned to the robot entity and/ or environment that performed best according to the predefined accomplishment metric. This provides the advantage that a learning mechanism is created that identifies patterns in already executed process traces and matches the results with the configuration of the best performing environment or environment configuration. Hence, the metric defines what goals are to be achieved. A goal might be fast processing or rather accurate processing. For each data item (e.g. customer number) a full processing history can be preserved and stored. This can also be used in audit log purposes to answer legal and compliance needs (e.g. this customer was processed with this environment by these user credentials at this time).

According to a further aspect of the present invention the orchestration server divides a process to be accomplished into single tasks and assigns them to at least one robot entity for its accomplishment. This provides the advantage that the orchestration can perform technical process management apart from authentication and authorization data. Hence, the logic is divided and changes regarding one server may not affect the other one.

According to a further aspect of the present invention the legacy systems are accessed by at least one robot entity using predefined interfaces. This provides the advantage that any legacy system can be integrated without further ado and hence the robots can accomplish a huge variety of tasks.

According to a further aspect of the present invention the at least one robot entity comprises a software agent, a set of control instructions, a physical robot, a software robot and/ or an autonomous artificial intelligence agent. This provides the advantage that a heterogeneous environment of robots can be integrated and can be operated seamlessly. They all can jointly act together towards accomplishing the overall process.

According to a further aspect of the present invention the method is implemented as a software protocol in a distributed environment. This provides the advantage that the method and the arrangement can be deployed in an easy way and can moreover be integrated in an existing environment.

The object is also solved by a system for automated robot entity based execution of processes across distributed heterogeneous computing environments, comprising a process manager unit arranged to initiate the process considering provided execution parameters and an orchestrator unit arranged to trigger the execution of the process, wherein the process defines the execution of at least one task by the robot entity operating in a first computing environment; an exception handler unit arranged to evaluate the execution of the at least one task by a predefined accomplishment metric; an output data storage unit arranged to store results of a completed process execution in an output storage, the orchestrator unit being arranged to launch an exception handler for an incomplete process execution which is arranged to adapt the provided execution parameters and initiates and triggers the process execution again.

The object is also solved by a computer program product comprising instructions to cause the arrangement to execute the steps of the method as well by a computer-readable medium having stored thereon the computer program.

It is of special advantage that the method as suggested above can be executed using structural features of the suggested system arrangement. Accordingly the method teaches steps which are arranged to operate the suggested arrangement. Furthermore, the arrangement comprises structural features allowing the accomplishment of the suggested method. In addition a computer program and a computer program product respectively is suggested comprising instructions which perform the suggested method when executed on a computer or the arrangement according to the present invention. Furthermore, the instructions provide means for implementing the structural features of the claimed arrangement. Accordingly an operable image of the structural features of the device can be created. Likewise an arrangement comprising the structural device features is provided.

The invention will now be described merely by way of illustration with reference to the accompanying drawings:
- Figure 1: shows a flow diagram for a process automation environment according to an aspect of the present invention;
- Figure 2: shows a message flow and organization diagram in a robotic process automation environment according to an aspect of the present invention, where the units are indicated that perform the method steps;
- Figure 3: shows a further message flow and organization diagram in a robotic process automation environment according to an aspect of the present invention; and
- Figure 4: shows an organization diagram in a robotic process automation environment according to an aspect of the present invention.

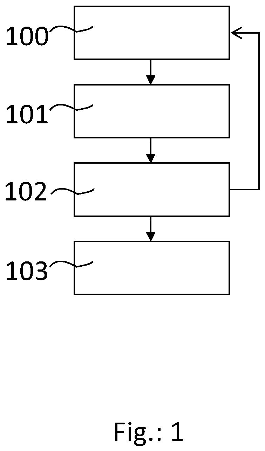

Figure 1 shows a method for automated robot entity based execution of processes across distributed heterogeneous computing environments, comprising the steps of initiating 100 the process considering provided execution parameters and triggering 101 the execution of the process, wherein the process defines the execution of at least one task by the robot entity operating in a first computing environment; evaluating 102 the execution of the at least one task by a predefined accomplishment metric; storing 103 results of a completed process execution in an output storage and launching an exception handler for an incomplete process execution which adapts the provided execution parameters and initiates 100 and triggers 101 the process execution again.

Throughout the application the terminology robot and worker refer to the same concept and can be used interchangeably. Hence, a worker describes a robot or a software agent in general.

The solution according to an aspect of the present invention may consist of at least the following features:
1. Cloud based orchestration service, Orchestrator, that control software agents,
2. Software agents, Workers, that are installed locally,
3. Data storage, Vault, where secrets are encrypted, and/ or
4. Certificate Provider that issues a Worker a unique certificate to run an operation.

The underlying message flow can be implemented as a computer implemented software protocol in a distributed RPA (robotic process automation) environment. The suggested method and the arrangement can be implemented as a robotics-as-a-service (RaaS) system.

Use cases may include some legacy systems. Software robots can be used to automate more demanding tasks, including machine learning and artificial intelligence, and it still needs some secrets and credentials to use other systems, although it is not always login name and password type sequences, but something similar that is needed e.g. to use API and get data.

The terms "legacy system" and "system used" can, according to an aspect of the present invention, be used interchangeably. The same holds true for the terms "Robot Entity" and "Worker" which can likewise be used interchangeably. Consequently a robot and worker may be represented by the same entity. The Link Token can likewise be referred to as a (Vault) Access Token.

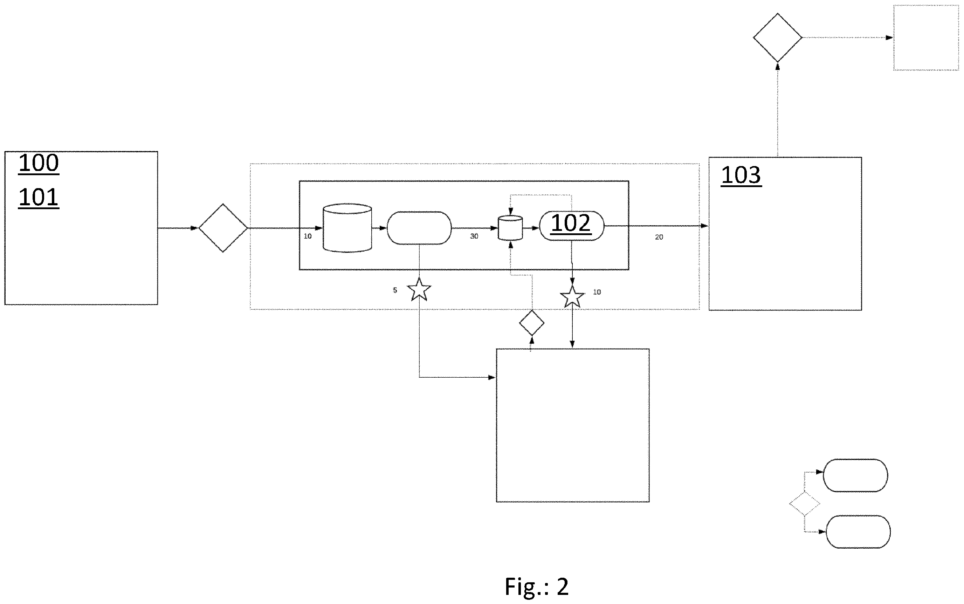

Figure 2 demonstrates the model and concept to automate processes across several IT systems according to an aspect of the present invention. A task or process can require execution in several IT systems and in several organizations. When a software robot or an RPA system is used to execute this type of process or task, the traditional model to run a robot on-premises installation or process data management cannot solve this need. Multi premises and organization processes create several security, data and process management issues.

According to an aspect of the present invention the solution comprises the following actors and items:
- A Process Manager that coordinates Orchestrator, Processes and Runtime Environments;
- A cloud-based Orchestrator that coordinates execution of the Processes;
- A Process, which contains execution configurations and sequence of Steps;
- A Runtime Environment that is an agent executing Robots interacting with organization's IT systems;
- A Step, which allocates a Robot to a Runtime Environment and contains execution configuration;
- A Robot, which is the execution instructions of the automated process;
- A Work Item storage, which contains Work Items outside of process execution scope;
- A Step Queue, which contains Work Items waiting to be processed by a Step; and/ or
- A Work Item, which contains the data used in Robot execution and is used for triggering Step executions in a process.

According to an aspect of the present invention the solution based on the innovation comprises the following steps:
- The Process Manager creates the Orchestrator to a cloud and Runtime Environments to organization systems;
- The Process Manager creates certificates and link tokens for the Runtime Environments. Orchestrator and Runtime Environments create their own private and public keys that can be used for encryption and identification. The tokens are used to link a Runtime Environment and Orchestrator to each other. In this linking process the Orchestrator change information which they can after the linking use to identify each other with their private and public keys;
- The Process Manager initiates the Orchestrator to execute a process with defined parameters (e.g. time, frequency to repeat, execution parameters);
- The Orchestrator starts the process execution according to the parameters. Process execution gets unprocessed Work Items from the Work Item storage, adds them to Step Queue and triggers the execution of the first configured Step;
- In execution of Steps, Work Items containing the data to be processed by the Robot executions, and the Robot file are passed to Runtime Environments from the according to the instructions configured in the Step;
- The Orchestrator manages the execution sequence of Steps by coordinating the flow of the Work Items. Work Items passed from Robot executions back to Orchestrator are assigned to the Step Queue of defined next Step, triggering an execution of that Step;
- If Robot execution in a Step fails for reason that encourages retrying, the Work Item is added back to the Step Queue of that defined Step;
- If Work Item was successfully processed by the last Step in the process, it is assigned to Work Item storage as successful item;
- If processing of a Work Item fails with defined reason, it is assigned to Work Item storage as failed item;
- When the whole process has been executed, the Orchestrator reports the execution report and results to pre-defined parties; and/ or
- The Orchestrator and Runtime Environment may always use the private and public keys to identify each other and encrypt data between each other.

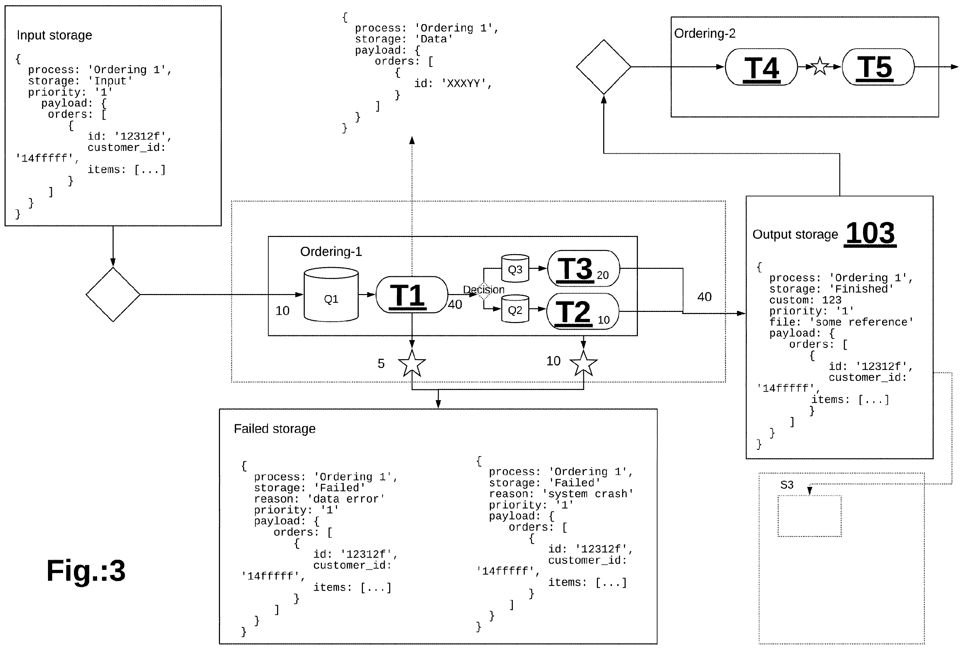

Figure 3 is similar to figure 2 and shows an alternative process model. Moreover, pseudo source code is included to demonstrate the technical teachings more precisely. The tasks T0, T1, ..., Tn are handled and thereby resulting cardinalities are introduced. For instance a process holding 10 tasks may be spilt into 40 subtasks. In case a the control flow is divided, for instance into T3 or T2, the subtasks may comprise 20 or 10 subtasks. Subtasks can likewise be referred to as work items. In case the execution is positive results are stored 103 and may be used by further tasks T4 and T5. In case no results are achieved they are sent to the error handling at the bottom. The figure also indicates the respective status of the task, namely "finished" or "failed". The system may be operated using different and distributed environments as indicated by the rectangles. For instance the output storage 103 can be a separated server.

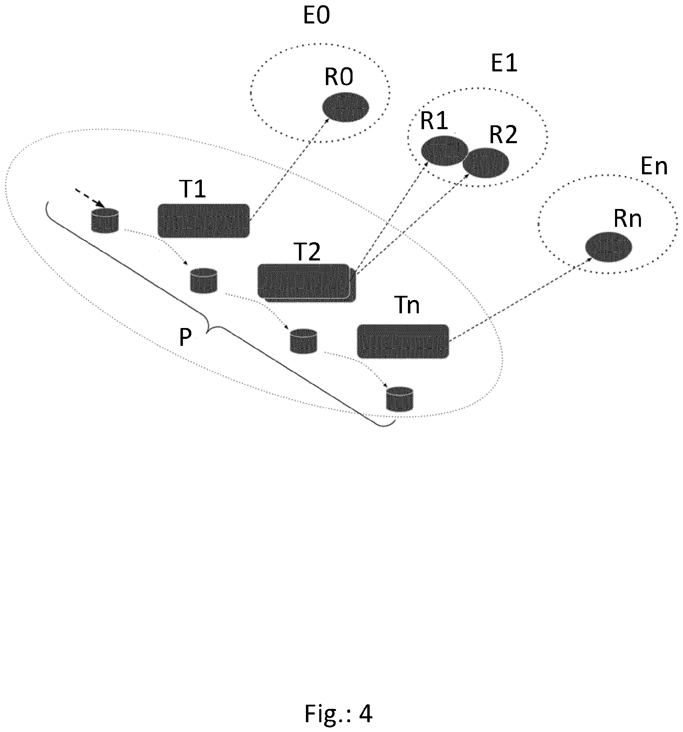

Figure 4 shows Environments E0, E1, ..., En and robot entities R0, R1, ..., Rn. The robot entities R0, R1, ..., Rn handle tasks T0, T1, ..., Tn and are located in distributed environments. As shown in figure 3 several robots can be assigned to one single environment. In case a task is not processed correctly the parameters may be changed meaning that for instance the environment is reconfigured and the processing is tried again or the robot migrates to another environment and tries the processing there. The process P is executed and respective results are stored.

An object or task may be defined in pseudo code as provided by the following example:

### Example object

```
 {
    process: 'Ordering 1',
    created: timestamp
    last accessed: timestamp
    status: 'completed'
    priority: '1'
    attributes: [
           {
               information: 'added with API',
           }
   ]
    payload: {
       orders: [
           {
               id: '12312f',
               customer_id: '14fffff',
               items: [...]
           }
   ]
  files:   [
           {
               file: 'somereferencehere',
           }
   ]
  }
 }
```

The status may be assigned the value "failed", "incomplete", "completed" or the like to indicate whether the result is to be processed, stored or reprocessed. There is also a possibility to add custom statuses, which can have custom logic not defined by the default system. Hence, the user can define their own status and launch the exception handler accordingly. In this context the status of the process being failed, incomplete or completed is just exemplary and not to be understood to be restrictive. These types of status are merely introduced for demonstration purposes. The status can be manually handled to describe which items are assigned according to certain logic in the process which is used by the exception handler.

## Claims

1. A method for automated robot entity based execution of processes across distributed heterogeneous computing environments, comprising the steps of:
- initiating (100) the process considering provided execution parameters and triggering (101) the execution of the process, wherein the process defines the execution of at least one task by the robot entity operating in a first computing environment;
- evaluating (102) the execution of the at least one task by a predefined accomplishment metric, wherein the predefined accomplishment metric defines the required output by a set of rules that indicate what data type or level of accuracy is required;
- storing (103) results of a completed process execution in an output storage and launching an exception handler for an incomplete process execution which adapts the provided execution parameters and initiates (100) and triggers (101) the process execution again, wherein the execution parameters define at least one of a second computing environment, an alternative task implementation, an update of input data required for process execution, a timestamp, a repeat frequency and/ or a computer environment configuration;
wherein a history of process executions is recorded and the task is assigned to the robot entity and/ or environment that performed best according to the predefined accomplishment metric.

2. The method of claim 1, **characterized in that** the task is split into at least two subtasks and the step of storing (103) or initiating again (100) and triggering again (101) is performed for each subtask.

3. The method of any one of the preceding claims, **characterized in that** the predefined accomplishment metric measures execution parameters and defines the required output by the set of rules.

4. The method of any one of the preceding claims, **characterized in that** the exception handler is triggered in case a predefined time out is reached.

5. The method of any one of the preceding claims, **characterized in that** a message flow is secured by at least one of link tokens, a public key, a private key, a certificate, credential data and/ or a timestamp.

6. The method of any one of the preceding claims, **characterized in that** the number of involved environments is limited by the number of subtasks the robot entities process.

7. The method of any one of the preceding claims, **characterized in that** credential data is used comprising a private key for authentication and authorization of the at least one robot entity at the at least one legacy system, an authentication secret, an authorization secret, a password and/ or access data.

8. The method of any one of the preceding claims, **characterized in that** an orchestration server divides a process to be accomplished into single tasks and assigns them to at least one robot entity for its accomplishment.

9. The method of any one of the preceding claims, **characterized in that** at least one robot entity comprises a software agent, a set of control instructions, a physical robot, a software robot and/ or an autonomous artificial intelligence agent.

10. The method of any one of the preceding claims, **characterized in that** the method is implemented as a software protocol in the distributed environment.

11. A system for automated robot entity based execution of processes across distributed heterogeneous computing environments, comprising:
- a process manager unit arranged to initiate (100) the process considering provided execution parameters and an orchestrator unit arranged to trigger (101) the execution of the process, wherein the process defines the execution of at least one task by the robot entity operating in a first computing environment;
- an exception handler unit arranged to evaluate (102) the execution of the at least one task by a predefined accomplishment metric, wherein the predefined accomplishment metric defines the required output by a set of rules that indicate what data type or level of accuracy is required;
- an output data storage unit arranged to store (103) results of a completed process execution in an output storage, the orchestrator unit being arranged to launch an exception handler for an incomplete process execution which is arranged to adapt the provided execution parameters and initiates (100) and triggers (101) the process execution again, wherein the execution parameters define at least one of a second computing environment, an alternative task implementation, an update of input data required for process execution, a timestamp, a repeat frequency and/ or a computer environment configuration;
wherein a history of process executions is recorded and the task is assigned to the robot entity and/ or environment that performed best according to the predefined accomplishment metric.

12. A computer program product comprising instructions to cause the arrangement of claim 11 to execute the steps of the method of any one of claims 1 to 10.

13. A computer-readable medium having stored thereon the computer program of claim 12.

## Patentansprüche

1. Verfahren zur automatisierten auf Roboterentitäten basierenden Ausführung von Prozessen über verteilte heterogene Rechenumgebungen, umfassend die folgenden Schritte:
- Initiieren (100) des Prozesses unter Berücksichtigung von bereitgestellten Ausführungsparametern und Auslösen (101) der Ausführung des Prozesses, wobei der Prozess die Ausführung von zumindest einer Aufgabe durch die Roboterentität definiert, die in einer ersten Rechenumgebung arbeitet;
- Auswerten (102) der Ausführung der zumindest einen Aufgabe durch eine vordefinierte Erfüllungsmetrik, wobei die vordefinierte Erfüllungsmetrik die erforderliche Ausgabe durch einen Regelsatz definiert, der angibt, welcher Datentyp oder Genauigkeitsgrad erforderlich ist;
- Speichern (103) von Ergebnissen einer abgeschlossenen Prozessausführung in einem Ausgabespeicher und Starten eines Ausnahmehandlers für eine unvollständige Prozessausführung, der die bereitgestellten Ausführungsparameter anpasst und die Prozessausführung erneut initiiert (100) und auslöst (101), wobei die Ausführungsparameter zumindest eines von einer zweiten Rechenumgebung, einer alternativen Aufgabenimplementierung, einer Aktualisierung von Eingabedaten, die für Prozessausführung erforderlich sind, einem Zeitstempel, einer Wiederholungsfrequenz und/oder einer Computerumgebungskonfiguration definiert,
wobei eine Historie von Prozessausführungen aufgezeichnet wird und die Aufgabe der Roboterentität und/oder Umgebung zugewiesen wird, die gemäß der vordefinierten Erfüllungsmetrik am besten abgeschnitten hat.

2. Verfahren nach Anspruch 1, **dadurch gekennzeichnet, dass** die Aufgabe in zumindest zwei Teilaufgaben aufgeteilt ist und der Schritt des Speicherns (103) oder erneuten (100) Initiierens und erneuten (101) Auslösens für jede Teilaufgabe durchgeführt wird.

3. Verfahren nach einem der vorhergehenden Ansprüche, **dadurch gekennzeichnet, dass** die vordefinierte Erfüllungsmetrik Ausführungsparameter misst und die erforderliche Ausgabe durch den Regelsatz definiert.

4. Verfahren nach einem der vorhergehenden Ansprüche, **dadurch gekennzeichnet, dass** der Ausnahmehandler ausgelöst wird, wenn ein vordefiniertes Zeitlimit erreicht ist.

5. Verfahren nach einem der vorhergehenden Ansprüche, **dadurch gekennzeichnet, dass** ein Nachrichtenfluss durch zumindest eines von Link-Token, einem öffentlichen Schlüssel, einem privaten Schlüssel, einem Zertifikat, Anmeldedaten und/oder einem Zeitstempel gesichert ist.

6. Verfahren nach einem der vorhergehenden Ansprüche, **dadurch gekennzeichnet, dass** die Anzahl an involvierten Umgebungen durch die Anzahl an Teilaufgaben, welche die Roboterentitäten verarbeitet, begrenzt ist.

7. Verfahren nach einem der vorhergehenden Ansprüche, **dadurch gekennzeichnet, dass** Anmeldedaten verwendet werden, die einen privaten Schlüssel zur Authentifizierung und Autorisierung der zumindest einen Roboterentität bei dem zumindest einen Altsystem, ein Authentifizierungsgeheimnis, ein Autorisierungsgeheimnis, ein Passwort und/oder Zugangsdaten umfassen.

8. Verfahren nach einem der vorhergehenden Ansprüche, **dadurch gekennzeichnet, dass** ein Orchestrierungsserver einen zu erfüllenden Prozess in einzelne Aufgaben aufteilt und sie zumindest einer Roboterentität zu ihrer Erfüllung zuweist.

9. Verfahren nach einem der vorhergehenden Ansprüche, **dadurch gekennzeichnet, dass** zumindest eine Roboterentität einen Softwareagenten, einen Steueranweisungssatz, einen physischen Roboter, einen Softwareroboter und/oder einen autonomen Agenten künstlicher Intelligenz umfasst.

10. Verfahren nach einem der vorhergehenden Ansprüche, **dadurch gekennzeichnet, dass** das Verfahren als Softwareprotokoll in der verteilten Umgebung implementiert wird.

11. System zur automatisierten auf Roboterentitäten basierenden Ausführung von Prozessen über verteilte heterogene Rechenumgebungen, umfassend:
- eine Prozessmanagereinheit, die angeordnet ist, um den Prozess unter Berücksichtigung von bereitgestellten Ausführungsparametern zu initiieren (100) und eine Orchestratoreinheit, die angeordnet ist, um die Ausführung des Prozesses auszulösen (101), wobei der Prozess die Ausführung von zumindest einer Aufgabe durch die Roboterentität, die in einer ersten Rechenumgebung arbeitet, definiert,
- eine Ausnahmehandlereinheit, die angeordnet ist, um die Ausführung der zumindest einen Aufgabe durch eine vordefinierte Erfüllungsmetrik auszuwerten (102), wobei die vordefinierte Erfüllungsmetrik die erforderliche Ausgabe durch einen Regelsatz definiert, der angibt, welcher Datentyp oder Genauigkeitsgrad erforderlich ist;
- eine Ausgabedatenspeichereinheit, die angeordnet ist, um Ergebnisse einer abgeschlossenen Prozessausführung in einem Ausgabespeicher zu speichern (103), wobei die Orchestratoreinheit angeordnet ist, um einen Ausnahmehandler für eine unvollständige Prozessausführung zu starten, der angeordnet ist, um die bereitgestellten Ausführungsparameter anzupassen und die Prozessausführung erneut initiiert (100) und auslöst (101), wobei die Ausführungsparameter zumindest eines von einer zweiten Rechenumgebung, einer alternativen Aufgabenimplementierung, einer Aktualisierung von Eingabedaten, die für Prozessausführung erforderlich sind, einem Zeitstempel, einer Wiederholungsfrequenz und/oder einer Computerumgebungskonfiguration definieren;
wobei eine Historie von Prozessausführungen aufgezeichnet wird und die Aufgabe der Roboterentität und/oder Umgebung zugewiesen wird, die gemäß der vordefinierten Erfüllungsmetrik am besten abgeschnitten hat.

12. Computerprogrammprodukt, das Anweisungen umfasst, um zu bewirken, dass die Anordnung nach Anspruch 11 die Schritte des Verfahrens nach einem der Ansprüche 1 bis 10 ausführt.

13. Computerlesbares Medium, auf dem das Computerprogramm nach Anspruch 12 gespeichert ist.

## Revendications

1. Procédé permettant l'exécution automatisée reposant sur une entité robot de processus parmi des environnements informatiques hétérogènes distribués, comprenant les étapes de : - initialisation (100) du processus en considérant des paramètres d'exécution fournis et déclenchement (101) de l'exécution du processus, ledit processus définissant l'exécution d'au moins une tâche par l'entité robot fonctionnant dans un premier environnement informatique ;
- évaluation (102) de l'exécution de la au moins une tâche par une métrique de réalisation prédéfinie, ladite métrique de réalisation prédéfinie définissant la sortie requise par un ensemble de règles qui indiquent quel type de données ou quel niveau de précision est requis ;
- stockage (103) de résultats d'une exécution de processus terminée dans un dispositif de stockage de sortie et lancement d'un gestionnaire d'exceptions pour une exécution de processus incomplète qui adapte les paramètres d'exécution fournis et initialise (100) et déclenche (101) à nouveau l'exécution de processus, lesdits paramètres d'exécution définissant au moins l'un d'un second environnement informatique, d'une mise en oeuvre de tâche alternative, d'une mise à jour de données d'entrée requises pour l'exécution de processus, d'un horodatage, d'une fréquence de répétition et/ou d'une configuration d'environnement informatique ;
un historique des exécutions de processus étant enregistré
et ladite tâche étant attribuée à l'entité robot et/ou à l'environnement qui a obtenu les meilleurs résultats selon la métrique de réalisation prédéfinie.

2. Procédé de la revendication 1, **caractérisé en ce que** la tâche est scindée en au moins deux sous-tâches et l'étape de stockage (103) ou de réinitialisation (100) et de redéclenchement (101) est effectuée pour chaque sous-tâche.

3. Procédé de l'une quelconque des revendications précédentes, **caractérisé en ce que** la métrique de réalisation prédéfinie mesure les paramètres d'exécution et définit la sortie requise par l'ensemble de règles.

4. Procédé de l'une quelconque des revendications précédentes, **caractérisé en ce que** le gestionnaire d'exceptions est déclenché dans le cas où un délai prédéfini est atteint.

5. Procédé de l'une quelconque des revendications précédentes, **caractérisé en ce qu'**un flux de messages est sécurisé par au moins l'un des jetons de lien, d'une clé publique, d'une clé privée, d'un certificat, de données de justificatif d'identité et/ou d'un horodatage.

6. Procédé de l'une quelconque des revendications précédentes, **caractérisé en ce que** le nombre d'environnements impliqués est limité par le nombre de sous-tâches traitées par les entités robot.

7. Procédé de l'une quelconque des revendications précédentes, **caractérisé en ce que** des données de justificatif d'identité sont utilisées comprenant une clé privée pour l'authentification et l'autorisation de la au moins une entité robot au niveau du au moins un système hérité, un secret d'authentification, un secret d'autorisation, un mot de passe et/ou des données d'accès.

8. Procédé de l'une quelconque des revendications précédentes, **caractérisé en ce que** le serveur d'orchestration divise un processus à accomplir en tâches uniques et les attribue à au moins une entité robot pour son accomplissement.

9. Procédé de l'une quelconque des revendications précédentes, **caractérisé en ce qu'**au moins une entité robot comprend un agent logiciel, un ensemble d'instructions de commande, un robot physique, un robot logiciel et/ou un agent d'intelligence artificielle autonome.

10. Procédé de l'une quelconque des revendications précédentes, **caractérisé en ce que** le procédé est mis en oeuvre sous la forme d'un protocole logiciel dans l'environnement distribué.

11. Système destiné à l'exécution automatisée reposant sur une entité robot de processus parmi des environnements informatiques hétérogènes distribués, comprenant :
- une unité de gestion de processus agencée pour initialiser (100) le processus en tenant compte des paramètres d'exécution fournis et une unité d'orchestration agencée pour déclencher (101) l'exécution du processus, ledit processus définissant l'exécution d'au moins une tâche par l'entité robot fonctionnant dans un premier environnement ;
- une unité de gestion d'exceptions agencée pour évaluer (102) l'exécution de la au moins une tâche par une métrique de réalisation prédéfinie, ladite métrique de réalisation prédéfinie définissant la sortie requise par un ensemble de règles qui indiquent quel type de données ou quel niveau de précision est requis ;
- une unité de stockage de données de sortie agencée pour stocker (103) des résultats d'une exécution de processus terminée dans un dispositif de stockage de sortie, l'unité d'orchestration étant agencée pour lancer un gestionnaire d'exceptions pour une exécution de processus incomplète qui est agencé pour adapter les paramètres d'exécution fournis et initialise (100) et déclenche (101) de nouveau l'exécution du processus, lesdits paramètres d'exécution définissant au moins l'un d'un second environnement informatique, d'une mise en oeuvre de tâche alternative, d'une mise à jour de données d'entrée requises pour l'exécution du processus, d'un horodatage, d'une fréquence de répétition et/ou d'une configuration d'environnement informatique ;
un historique de l'exécution de processus étant
enregistré et ladite tâche étant attribuée à l'entité robot et/ou à l'environnement qui a le mieux fonctionné selon la métrique de réalisation prédéfinie.

12. Produit-programme informatique comprenant des instructions pour amener l'agencement de la revendication 11 à exécuter les étapes du procédé de l'une quelconque des revendications 1 à 10.

13. Support lisible par ordinateur sur lequel est stocké le programme informatique de la revendication 12.
